Europäisches Patentamt

European Patent Office

Office européen des brevets

(19)

(11) Veröffentlichungsnummer: **0 070 967**
**B1**

(12) EUROPÄISCHE PATENTSCHRIFT

(45) Veröffentlichungstag der Patentschrift:
04.09.85

(51) Int. Cl.⁴: **F 16 L 23/00**

(21) Anmeldenummer: **82103288.5**

(22) Anmeldetag: **20.04.82**

(54) **Zentrierring für Flanschverbindungen.**

(30) Priorität: **23.07.81 DE 3129056**

(43) Veröffentlichungstag der Anmeldung:
**09.02.83 Patentblatt 83/6**

(45) Bekanntmachung des Hinweises auf die Patenterteilung:
**04.09.85 Patentblatt 85/36**

(84) Benannte Vertragsstaaten:
**CH FR GB IT LI NL**

(56) Entgegenhaltungen:
**DE - A - 2 313 390**
**DE - B - 2 545 520**
**DE - U - 7 244 501**
**FR - E - 91 308**
**US - A - 4 095 809**

(73) Patentinhaber: **Plate, Heinz, Mainstrasse 38,
D-5000 Köln 50 (DE)**

(72) Erfinder: **Plate, Heinz, Mainstrasse 38,
D-5000 Köln 50 (DE)**

(74) Vertreter: **Leineweber, Jürgen, Dipl.-Phys., Am
Heidstamm 78 a, D-5000 Köln 40 (DE)**

**Beschreibung**

Die Erfindung bezieht sich auf einen Zentrierring für Flanschverbindungen mit einer für die Halterung eines Dichtringes geeignet gestalteten radial inneren oder äusseren Randfläche. Je nachdem, ob der Ring der Aussen- oder Innenzentrierung dient, liegt der Dichtring an der Innen- oder Aussenfläche des Zentrierringes an.

Ein Aussenzentrierring dieser Art ist aus dem DE-U-7 244 501 bekannt. Dieser vorbekannte, z.B. aus Aluminium bestehende Zentrierring ist nur mit relativ hohem technischen und Kostenaufwand herstellbar, da seine Innenfläche zum Zwecke der Halterung eines elastomeren Rundschnurringes konkav gestaltet ist. Auch ein Wechsel des Werkstoffes — Kunststoff anstelle von Aluminium — und die Herstellung des Zentrierringes durch Spritzen (und nicht mehr spanabhebend) bringt keine massgebliche Vereinfachung bzw. Verbilligung, da die Form der Innenfläche des Dichtringes einen sogenannten Hinterschnitt aufweist. Derartige Gegenstände benötigen einen mehrteiligen und deshalb komplizierten Formkern. Werzeuge dieser Art sind deshalb kostspielig.

Der vorliegenden Erfindung liegt die Aufgabe zugrunde, einen Zentrierring für Flanschverbindungen der eingangs genannten Art zu schaffen, welcher in einfacher Weise z.B. durch Kunststoffspritzen herstellbar ist.

Diese Aufgabe wird erfindungsgemäss dadurch gelöst, dass die Randfläche in Umfangsrichtung abschnittsweise derart unterschiedlich gestaltet ist, dass mindestens zwei Abschnitte vorhanden sind, welche den Dichtring, gesehen in Achsrichtung der Flanschverbindung, von unterschiedlichen Seiten stützen.

Da die einzelnen Abschnitte eines solchen Zentrierringes den Dichtring nur jeweils an einer Seite stützen, brauchen diese Abschnitte keinen Hinterschnitt mehr aufzuweisen. Das der Herstellung eines derartigen Zentrierringes dienende Spritzwerkzeug kann deshalb wesentlich einfacher gestaltet sein, so dass eine drastische Vereinfachung und Verbilligung des Herstellvorganges erzielt werden können.

Die besondere Form des Zentrierringes hat aber nicht nur dann Vorteile, wenn er aus Kunststoff besteht und durch Spritzen hergestellt ist. Auch bei aus Metall, z.B. Aluminium, bestehenden Zentrierringen hat die erfindungsgemässe Formgebung Vorteile, da unabhängig davon, ob der Ring durch Guss oder spanabhebende Bearbeitung hergestellt wird, auf eine komplizierte Formgebung mit konkavem Profil verzichtet werden kann.

Weitere Vorteile und Einzelheiten der Erfindung sollen anhand von in den Figuren 1 bis 6 dargestellten Ausführungsbeispielen erläutert werden.

Die Fig. 1, 2 und 4 bis 6 zeigen jeweils Schnitte durch verschiedene Ausführungsformen eines Zentrierringes nach der Erfindung, jeweils mit davon gehalterten Dichtringen.

Fig. 3 zeigt eine Draufsicht auf eine Ausführungsform des Zentrierringes nach Fig. 2.

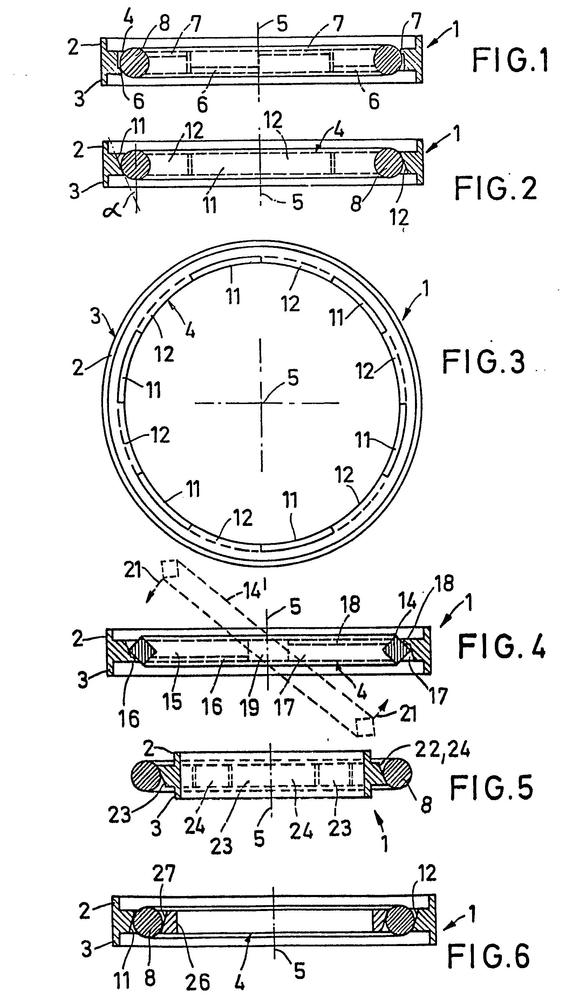

Der Zentrierring 1 nach Fig. 1 weist im Bereich seiner Stirnseiten Vorsprünge 2 und 3 auf, die in eingebautem Zustand die miteinander zu verbindenden, nicht dargestellten Flansche umgreifen und dadurch die gewünschte Zentrierung bewirken. Zweckmässigerweise besteht der Ring aus Polyamid, vorzugsweise PA 6.6.

Die Innenfläche 4 hat eine im wesentlichen zylindrische Form, bezogen auf die Achse 5 des Zentrierringes 1. Zusätzlich sind Vorsprünge oder Wülste 6 und 7 vorgesehen. Die mit 6 bezeichneten Vorsprünge sind jeweils im unteren Bereich (bezogen auf die dargestellte Stellung des Zentrierringes 1) und die mit 7 bezeichneten Vorsprünge sind jeweils im oberen Bereich der inneren Zylinderfläche 4 angeordnet. Dadurch entstehen für den eingelegten Dichtring 8 Stützränder, die alternierend auf unterschiedlichen Seiten des Ringes 8 liegen und ihn dadurch als Ganzes in seiner dargestellten Position festhalten. Die Innenfläche 4 weist keinen Hinterschnitt mehr auf, so dass die Innenfläche 4 einfach hergestellt werden kann.

Beim Ausführungsbeispiel nach den Figuren 2 (Schnittdarstellung) und 3 (Draufsicht) sind gegenüber der Achse 5 geneigte Flächenabschnitte 11 und 12 (vorzugsweise mit einem Winkel $\alpha \approx 20°$ gegenüber der Achse 5) vorgesehen. Die Neigung der Flächenabschnitte 11 bewirkt, dass sie den Dichtring 8 von unten (wieder bezogen auf die dargestellte Stellung des Zentrierringes 1) abstützen, während die Neigung der Flächenabschnitte 12 bewirkt, dass der Dichtring von oben her abgestützt ist.

Fig. 4 zeigt ein Ausführungsbeispiel für einen Zentrierring 1, dessen Innenfläche zur Halterung eines Metalldichtringes 14 geeignet gestaltet ist. Der Metalldichtring 14 hat im Querschnitt die Form eines auf der Spitze stehenden Quadrates. Mit seiner äusseren Kante dient er der Anlage am Zentrierring 1. Die beiden axial gerichteten Kanten liegen in zusammengebautem Zustand den nicht dargestellten Flanschflächen an und bewirken die gewünschte Dichtung.

Zur Halterung des Metalldichtringes 14 im Bereich der Innenfläche 4 des Dichtringes 1 sind zwei unterschiedlich gestaltete Abschnitte der Innenfläche vorgesehen, die sich jeweils über ca. 160 bis 170°C erstrecken. Der eine Abschnitt 15 weist eine gegenüber der Achse 5 derart geneigte Innenfläche auf, dass dadurch eine Abstützung des Dichtringes 14 von unten gewährleistet ist. Zusätzlich ist auf der Stützseite dieses Flächenabschnittes noch der Wulst 16 vorgesehen.

Der andere Flächenabschnitt 17 ist entsprechend umgekehrt geneigt und mit dem Wulst 18 ausgerüstet, so dass eine Abstützung des Dichtringes 14 von oben sichergestellt werden kann.

Der Dichtring 14 ist in seiner Einbaulage ausgezogen dargestellt. Zusätzlich ist er nochmals gestrichelt dargestellt (14'), woraus hervorgeht, wie der Einbau erfolgt. Der Dichtring wird in den Bereichen 19 des Zentrierringes eingeführt, die nicht geneigt oder mit Wülsten versehen, sondern im wesentlichen zylindrisch ausgebildet sind. Danach wird er entsprechend der Pfeile 21 gedreht und in seine ausgezogen dargestellte Position gebracht.

Fig. 5 zeigt ein Ausführungsbeispiel eines Zentrierringes 1 nach der Erfindung, welcher der Innenzentrierung des Dichtringes 8 dient. Die stirnseitigen Vorsprünge 2 und 3 greifen in die nicht dargestellten miteinander zu verbindenden Flansche ein und bewirken die gewünschte Zentrierung. Wie beim Ausführungsbeispiel nach Fig. 2 ist die den Dichtring 8 haltende Randfläche 22 (in Fig. 2 die Innenfläche 4, in Fig. 5 die Aussenfläche 22) mit geneigten Flächenabschnitten 23 und 24 ausgerüstet. Die Flächenabschnitte 24 sind wieder gegenüber der Achse 5 derart geneigt, dass sie eine Abstützung des Ringes 8 von unten bewirken, während die Neigung der Abschnitte 23 eine Abstützung des Ringes von oben bewirkt. Natürlich könnten die Dichtringstützflächen dieses Innenzentrierringes auch den Fig. 1 und 4 entsprechend ausgebildet sein.

Fig. 6 zeigt einen Ring 1, wie er in Fig. 2 dargestellt ist. Er dient als Aussenzentrierring für den elastomeren Dichtring 8. Da es in manchen Fällen vorkommen kann, dass der Dichtring 8 infolge seiner Elastizität und der Druckdifferenz nach innen gleitet, kann ein innerer Stützring 26 zweckmässig sein. Besonders vorteilhaft ist es dabei, wenn seine dem Dichtring 26 anliegende Randfläche 27 ebenfalls abschnittsweise derart unterschiedlich gestaltet ist, dass mindestens zwei Abschnitte vorhanden sind, welche den Dichtring 8, 14 von unterschiedlichen Seiten stützen.

## Patentansprüche

1. Zentrierring (1) für Flanschverbindungen mit einer für die Halterung eines Dichtringes (8, 14) geeignet gestalteten radial inneren oder äusseren Randfläche (4, 22), dadurch gekennzeichnet, dass die Randfläche (4, 22) in Umfangsrichtung abschnittsweise derart unterschiedlich gestaltet ist, dass mindestens zwei Abschnitte (6, 7; 11, 12; 15, 17; 23, 24) vorhanden sind, welche den Dichtring (8, 14), gesehen in Achsrichtung der Flanschverbindung, von unterschiedlichen Seiten stützen.

2. Zentrierring nach Anspruch 1, dadurch gekennzeichnet, dass die Randfläche (4) im wesentlichen zylindrisch gestaltet ist und dass aus der Zylinderfläche hervorragende Vorsprünge (6, 7) vorgesehen sind, welche den Dichtring (8) abwechselnd auf einander gegenüberliegenden Seiten abstützen.

3. Zentrierring nach Anspruch 1, dadurch gekennzeichnet, dass die Randfläche (4, 22) Abschnitte (11, 12 bzw. 15, 17 bzw. 23, 24) aufweist, die gegenüber der Achse (5) des Zentrierringes (1) eine alternierend wechselnde Neigung haben.

4. Zentrierring nach Anspruch 3, dadurch gekennzeichnet, dass auf der den Dichtring (14) stützenden Seite der geneigten Abschnitte (15, 17) zusätzlich je ein Wulst (16, 18) vorgesehen ist.

5. Zentrierring nach einem der Patentansprüche 1 bis 4, dadurch gekennzeichnet, dass er aus Kunststoff — vorzugsweise Polyamid — besteht.

6. Zentrierring nach einem der vorhergehenden Ansprüche, dadurch gekennzeichnet, dass er für die Halterung eines aus elastomerem Material bestehenden Rundschnurringes (8) geeignet gestaltet ist.

7. Zentrierring nach einem der vorhergehenden Ansprüche, dadurch gekennzeichnet, dass er mehrere, vorzugsweise etwa zwölf, Abschnitte (11, 12) aufweist, die derart gestaltet sind, dass sie — einander abwechselnd — den Dichtring (8) von verschiedenen Seiten stützen.

8. Zentrierring nach einem der Ansprüche 1 bis 6, dadurch gekennzeichnet, dass die Randfläche (4, 22) nur zwei sich über 180° oder — im Falle der Halterung eines Metalldichtringes (14) — weniger erstreckende Abschnitte (15, 17) zur Halterung des Dichtringes auf unterschiedlichen Seiten aufweist.

9. Zentrierring nach einem der Ansprüche 1 bis 8, dadurch gekennzeichnet, dass er als Aussenzentrierring gestaltet ist und dass ein innerer Stützring (26) für den Dichtring (8) vorgesehen ist, dessen dem Dichtring zugewandte Seite ebenfalls abschnittsweise derart unterschiedlich gestaltet ist, dass mindestens zwei Abschnitte vorhanden sind, welche den Dichtring (8) von unterschiedlichen Seiten stützen.

## Claims

1. Centering ring (1) for flange joints having a radially inner or outer face (4, 24) of a configuration suitable for the retention of an annular gasket (8, 14) characterized in that the rim surface (4, 22) is — in direction of circumference — of different configuration section by section such that at least two sections (6, 7; 11, 12; 15, 17; 23, 24) are present which support the annular gasket (8, 14) from different sides, seen in the direction of the axis of the flange joint.

2. Centering ring of Claim 1, characterized in that the rim surface (4) is of a substantially cylindrical configuration, and that projections (6, 7) extending from the cylindrical surface are provided, which support the annular gasket (8) alternately on opposite sides.

3. Centering ring of Claim 1, characterized in that the rim surface (4, 22) has sections (11 and 12, 15 and 17, and 23 and 24) which have an alternately changing inclination with respect to the axis (5) of the centering ring (1).

4. Centering ring of Claim 3, characterized in that a bead (16, 18) is additionally provided on each side of the inclined sections (15, 17) which supports the annular gasket (14).

5. Centering ring of any of Claims 1 to 4, characterized in that it consists of plastic — preferably polyamide.

6. Centering ring of any of the foregoing claims, characterized in that it is of a configuration suitable for the retention of an annular gasket (8) consisting of elastomeric material.

7. Centering ring of any of the foregoing claims, characterized in that it has a plurality, preferably about twelve, sections (11, 12) which are of such configuration that, alternating with one another, they support the annular gasket (8) on different sides.

8. Centering ring of any of Claims 1 to 6, characterized in that the rim surface (4, 22) has only two sections (15, 17) extending over 180° or, in the case of the retention of a metal annular gasket (14), less, for the retention of the annular gasket from different sides.

9. Centering ring of any of Claims 1 to 8, characterized in that it is in the form of an external centering ring, and that an inner supporting ring (26) is provided for the annular gasket and its side facing the annular gasket is likewise of such different configuration section by section that at least two sections are present which support the annular gasket (8, 14) from different sides.

## Revendications

1. Anneau de centrage (1) pour raccords à brides avec une bordure (4, 22) radiale intérieure ou extérieure, façonnée de façon adéquate pour maintenir un joint (8, 14) caractérisé par le fait que la dite bordure (4, 22) circonférentielle est façonnée par segments de façon tellement différente qu'il y ait au moins deux segments (6, 7; 11, 12; 15, 17; 23, 24) qui maintiennent le joint (8, 14) de différents côtés, vu dans le sens axial du raccord à bride.

2. Anneau de centrage suivant revendication 1, caractérisé par le fait que la bordure (4) est essentiellement cylindrique et que des épaulements (6, 7) en saillie sur la surface cylindrique sont prévus pour soutenir le joint (8) à tour de rôle sur des faces opposées.

3. Anneau de centrage suivant revendication 1, caractérisé par le fait que la bordure (4, 22) est partagée en segments (11, 12; 15, 17; 23, 24) inclinés alternativement vers le bas et vers le haut par rapport à l'axe (5) de l'anneau de centrage (1).

4. Anneau de centrage suivant revendication 3, caractérisé par le fait que sur chaque face des segments inclinés (15, 17) soutenant le joint (14) un renflement (16, 18) est prévu.

5. Anneau de centrage suivant une des revendications 1 à 4, caractérisé par le fait qu'il est en matière synthétique — de préférence en polyamide.

6. Anneau de centrage suivant une des revendications ci-dessus, caractérisé par le fait qu'il est travaillé de façon adéquate pour maintenir un joint torique (8) en matériau élastomère.

7. Anneau de centrage suivant des revendications ci-dessus, caractérisé par le fait qu'il est partagé en plusieurs segments (11, 12), de préférence en douze, travaillés de façon qu'ils soutiennent — à tour de rôle — le joint (8) de différents côtés.

8. Anneau de centrage suivant revendications 1 à 6, caractérisé par le fait que la bordure (4, 22) n'est subdivisée qu'en deux segments (15, 17) s'étendant sur 180° ou moins — pour le soutien d'un joint métallique (14) — pour maintenir le joint sur différents côtés.

9. Anneau de centrage suivant une des revendications 1 à 8, caractérisé par le fait qu'il est conçu comme anneau extérieur et qu'une bague-support (26) est prévue pour le joint (8), dont la face orientée vers le joint est également façonnée de façon tellement différente qu'il y ait au moins deux segments qui maintiennent le joint (8) de différents côtés.

FIG.1

FIG.2

FIG.3

FIG.4

FIG.5

FIG.6